Europäisches Patentamt

European Patent Office

Office européen des brevets

(19)

(11) Publication number: **0 203 701**
A2

# (12) EUROPEAN PATENT APPLICATION

(21) Application number: 86302930.2

(22) Date of filing: **18.04.86**

(51) Int. Cl.⁴: **F 24 H 1/18**, A 47 J 31/00

(30) Priority: 29.05.85 GB 8513530
14.06.85 GB 8515060

(43) Date of publication of application: 03.12.86
Bulletin 86/49

(84) Designated Contracting States: DE FR GB NL SE

(71) Applicant: W.M. STILL & SONS LIMITED, Fellows Road Hastings, East Sussex, TN34 3TX (GB)

(72) Inventor: Hayes, Cecil, 17 Ashford Way, Hastings East Sussex (GB)

(74) Representative: Allen, Oliver John Richard et al, Lloyd Wise, Tregear & Co. Norman House 105-109 Strand, London, WC2R 0AE (GB)

(54) Improvements in and relating to boilers or tanks for hot water.

(57) Water heating apparatus comprising a tank having means for heating water characterised in that the tank outlet is at a position between its top and bottom and a significant distance above the bottom and in that a valve is provided to prevent water from reaching the tap as and until the water in the tank above the outlet is at a predetermined temperature.

EP 0 203 701 A2

ACTORUM AG

## IMPROVEMENTS IN AND RELATING TO BOILERS OR TANKS FOR HOT WATER

This invention relates to boilers or tanks for hot water.

Hitherto when water is to be drawn off from a tank or boiler of hot water, the tap has normally been connected at or adjacent the bottom of the tank or boiler with the result that the whole tank has had to be heated to the desired temperature before water at that temperature could be drawn off.

Furthermore water may be, and often is, drawn off before it has reached the desired temperature.

A hot water tank or boiler in accordance with this invention has a water draw-off tap connected thereto at a point between the top and bottom of the tank and a valve is provided to prevent water reaching the tap until the water in the tank above the point of connection to the tap is at a predetermined temperature.

In this way water cannot be drawn off until that to be discharged is at a predetermined temperature whilst at the same time water may be drawn off at that temperature before the whole tank has reached the desired temperature. Such a tank or boiler may be incorporated in a coffee or tea making apparatus such as that forming the subject of co-pending application no.                    filed herewith.  An upper thermostat probe is positioned in the tank at or slightly above the level of connection to the tap and a solenoid valve is connected to the thermostat operated by this upper probe. The solenoid valve remains closed as and until the water in the upper portion of the tank and above the thermostat probe reaches a predetermined set temperature whereupon the thermostat operates to open the valve to allow hot water to be dispensed from the tank. The valve is closed when water has been dispensed and the temperature of the water in the upper part of the tank has dropped, and until the thermostat is again operated when the water in the upper portion of the tank again reaches the desired temperature.

When the water in at least the upper portion of the tank has reached the desired temperature then coffee infusion may take place by the pressing of an infusion switch which allows water to enter the apparatus. When the infusion switch is closed the solenoid valve isolating the tap is preferably automatically closed so that hot water cannot be dispensed from the tank through the tap, during coffee infusion.

Preferably a probe is present in the tank to sense the level of the water, positioned below the point of take-off for the coffee infusion head and above the take-off point for the tap. When the level of water in the tank drops to this level probe, due to take-off of water then a mains water inlet valve is opened to allow water to enter the tank to replace that drawn off. The water is preferably introduced in the bottom of the tank and the water inlet valve is closed when the water level in the tank, or subsidiary tank, reaches a further water level probe.

Embodiments of the invention will now be described by way of example with reference to the accompanying drawings in which:-

Figure 1 is a side sectional view of an automatic brewing apparatus according to the invention,

Figure 2 is a rear view of the apparatus of Figure 1,

Figure 3 is a top plan sectional view of the apparatus of Figure 1 taken at III-III,

Figure 4 is a top plan sectional view of the apparatus of Figure 1 taken at IV-IV,

Figure 5 is a circuit diagram for the apparatus of Figure 1 with a dispensing tap, and

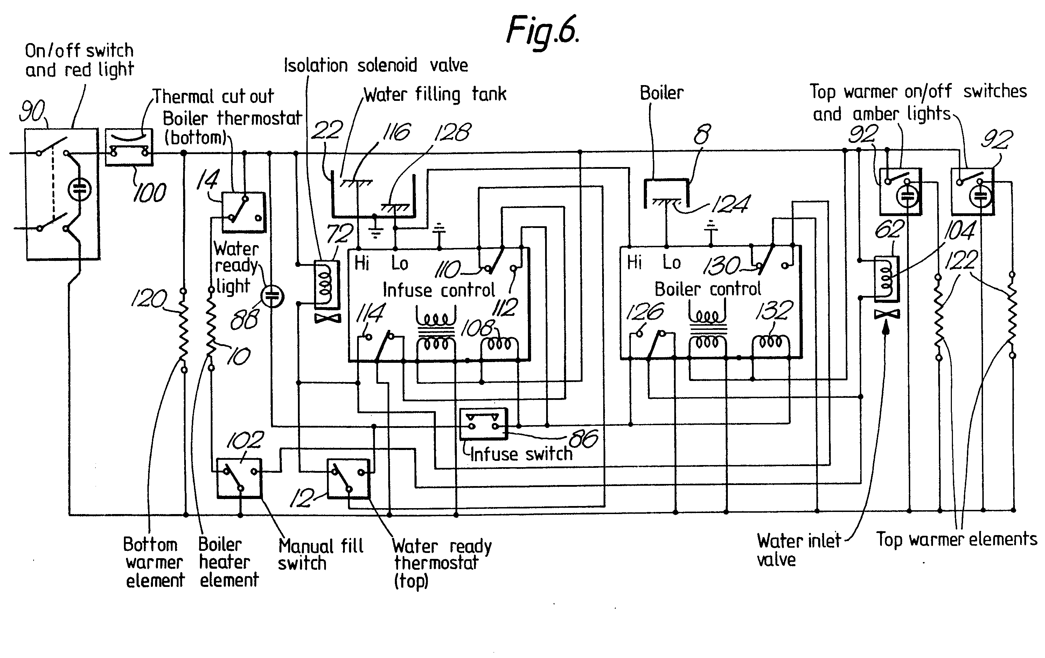

Figure 6 is a modified circuit diagram for the apparatus of Figure 1 with a dispensing tap.

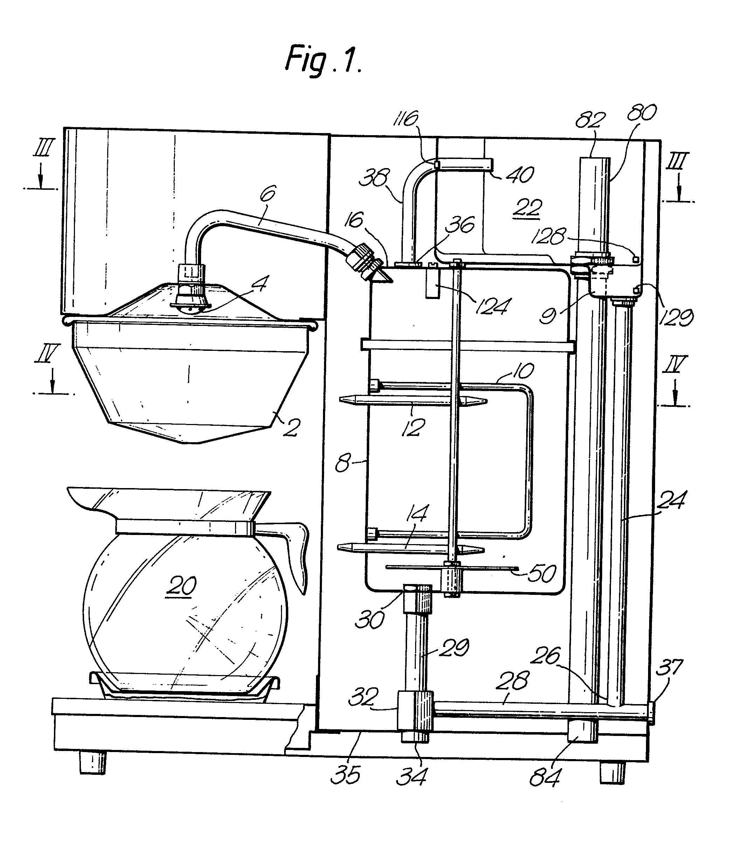

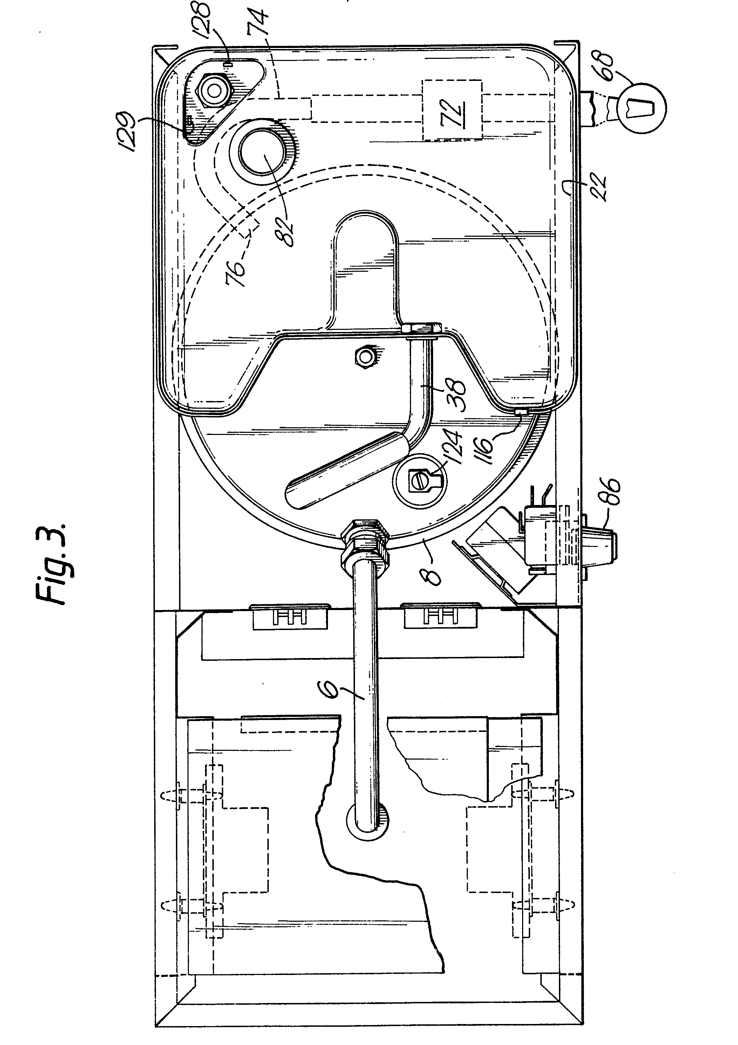

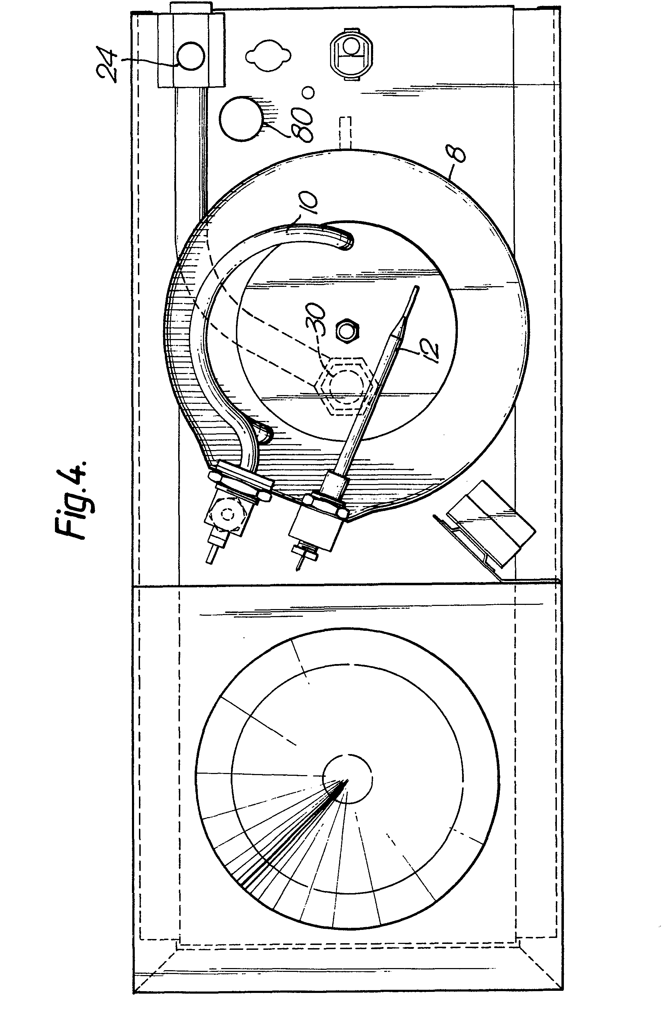

The apparatus shown in Figures 1 to 4 is a coffee or tea brewing apparatus having an infuser pan 2 for tea or coffee, a spray head 4 and a conduit 6 leading from the spray head to the top of a hot water tank 8, the conduit 6 connecting as a siphon tube from the top of the tank. The tank 8 has a heater element 10, an upper thermostat probe 12 and a lower thermostat probe 14. Upper thermostat probe 12 is located about a third of the way down from the top 16 of the tank so as to measure the temperature (which when hot is between about 90 and 95°C) of the top third of the volume of the tank which volume is equivalent to a water charge for one infusion charge for receptacle 20 positioned below the infuser pan 2. The thermostat probe 14 is arranged to measure the water temperature at the bottom of the tank (typically between about 92 and 97°C).

Above the tank 8 is a plumbed in filler tank 22 connected via a conduit 24 to a T-junction 26, thence via a conduit 28 to a T-junction 32 and via a conduit 29 which opens into an inlet 30 of the mains tank 8. The lower leg 32 of the T-junction extends downwards to a drain plug 34 which also serves to fasten junction 32 to a plate 35 which by means of conduit 29 supports tank 8. A further drain plug 37 is provided on junction 26. At the top of the tank 8 is an air outlet 36 connected via a conduit 38 to an inlet 40 at the top of filler tank 22. A baffle plate 50 is provided above inlet 30 to divert the rising water during a filling operation away from the centre of the tank and encourage the water to form a distinct cold water strata.

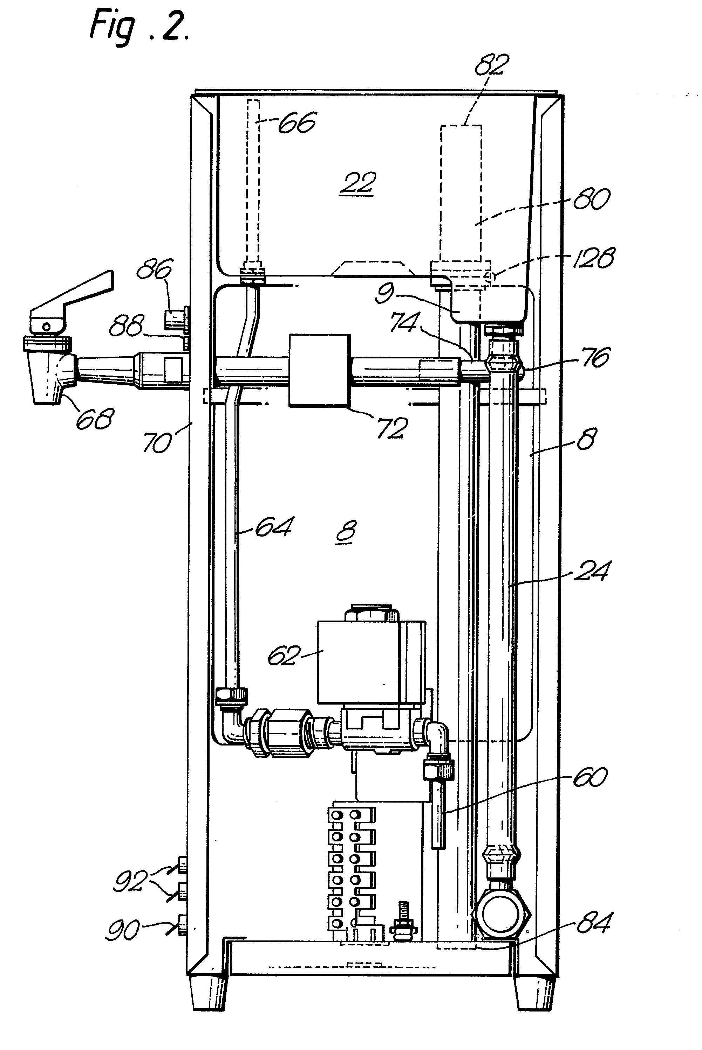

A water mains connection pipe 60 (see Figure 2) leading to a water inlet solenoid valve 62 is connected by conduit 64 to an inlet 66 in filler tank 22.

An emergency overflow pipe 80 provides an emergency outlet 82 from the filler tank 22 to vent through the apparatus to an outlet 84 below the apparatus. This is in case of failure of valve 62 resulting in this remaining open, so that water can overflow through the apparatus without damaging any electrical equipment.

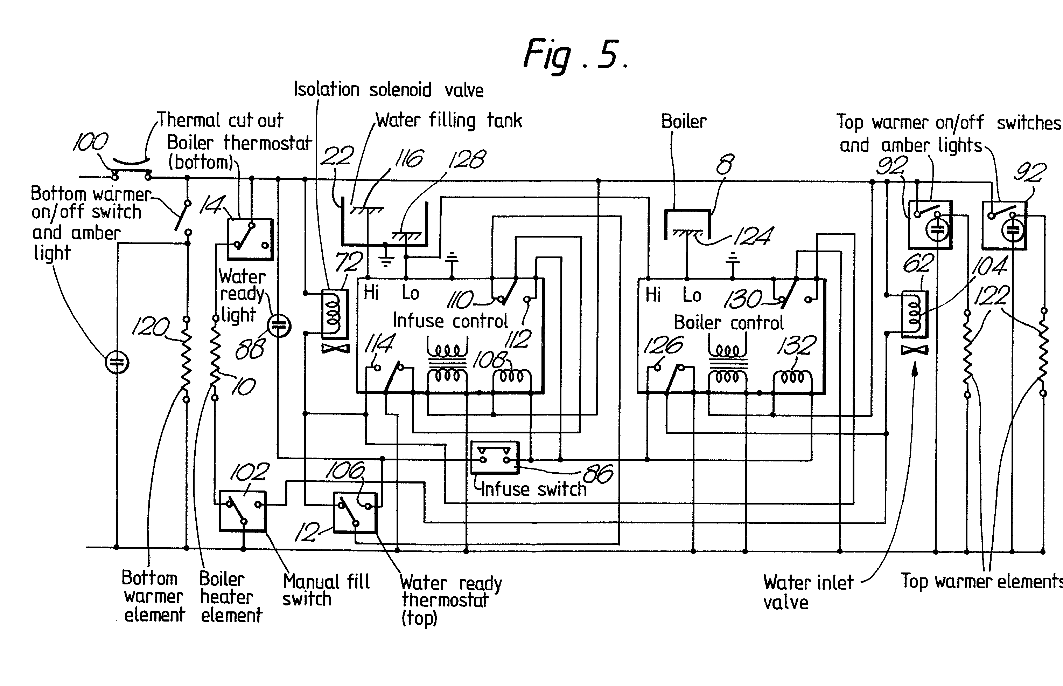

An infusion switch 86 and water ready lamp 88 are mounted on the side of casing 70 (see Figure 2). A machine on/off switch 90 and top heater switch or switches 92 are also mounted on side of casing 70. The circuit diagram for the automatic brewing apparatus is shown in Figure 5 and includes a thermal cut out 100 which operates to disconnect the electrical supply to the main heater 10 if the apparatus overheats.

A water level probe 124 for the tank 8 consisting of a stainless steel screw extending down from the top of tank 8 (Figure 1) and mounted in an insulating block is at a level about 2mm below the tank top. In the filler tank 22 a high level water probe 116 is at a level of about 1mm below the top of pipe 80 and a low level probe 128 is about level with the main part of tank 22 at the top of pocket 9 of tank 22. As tank 22 is made of plastics an earth 129 is provided at the bottom of pocket 9.

A water draw-off tap 68 (see Figure 2) is provided on the side of the casing 70 of the apparatus and is connected via an isolation solenoid valve 72 to a conduit 74 connected in turn to a water outlet 76 in the top third of tank 8.

The operation of the apparatus shown in Figures 1 to 4 is as follows:-

When the apparatus is first to be filled with water a manual fill switch 102 is moved from the position shown in Figure 5 to make a circuit through the solenoid 104 of the water inlet valve 62 so that this is opened allowing water from the mains supply to enter the filler tank 22 until the apparatus is full. The fill switch 102 is then moved to the position shown in Figure 5. In this position the main boiler heater element 10 is energised through the bottom thermostat probe 14 to heat the water in the tank. When the water in the upper portion of the tank above the probe of the upper thermostat 12 has been heated to the desired temperature of about 90°C to 95°C, the thermostat 12 operates from the position shown in Figure 5 to make with the contact 106. The water ready light 88 is then lit showing that an infusion operation may take place.

When the infuse switch 86 is momentarily closed, the relay 108 is energised moving the switch 110 from the contact shown to a second contact 112. When in this position the relay 108 is energised through the connection 112 to keep the switch in that operative position. The solenoid 104 is then operated through the switch 110 and a further switch 114 to open the water inlet valve to allow water to enter the water filling tank from the mains. Infusion then takes place with water overflowing from the filler tank 22 to the tank 8 through the pipes 24, 28 and 29 displacing water from the top of the tank which flows through conduit 6 to the spray head 4. The infused coffee or tea continues perculating through pan 2 into container 20 until the water level reaches the high level probe 116 in the water filling tank whereupon the switch 114 is operated to open the connection between the solenoid 104 and the neutral line thus closing the water inlet valve 62.

When the whole tank 8 has reached the desired water temperature, the bottom thermostat 14 operates to de-energise the boiler heater element 10.

Manual switch 118 is provided to energise a bottom warmer element 120. Heating elements 122 for the top warmer elements are energised on closure of switches 92.

The infusion switch 86 cannot be operated to open the water inlet valve until the water ready light 88 is lit and able to pass current. Hence, coffee infusion cannot take place until the water is at the desired temperature.

It will of course be appreciated that a mains on/off switch for the boiler heating element may be provided if desired.

When the water in the top portion of the boiler tank is being heated to the desired temperature, a tap isolation valve 72 remains closed with the solenoid energised, the circuit being made through the top thermostat 12, the relay switch 110 and the level switch 114. When the top thermostat 12 is operated to make the circuit through the water ready lamp 88 then the circuit through the solenoid of the valve 72 is broken at the top thermostat, and the valve 72 is opened allowing hot water to be drawn off from the tap. When the thermostat 12 operates to change the switch 106 because the water in the top portion of the boiler tank has dropped below the required temperature, then the valve 72 again closes.

When water is being drawn off through the tap, the water level drops below the level probe 124 located in the top of the boiler between the point of take off for the spray head and the point of take off for the tap. When the water level drops below this probe, a switch 126 moves so as to complete the circuit through the solenoid 104 of the water inlet valve 62 so as to open this valve. Water then enters the apparatus until the level reaches the low water probe 128 in the water filling tank which operates the switch 126, whereupon the circuit to the water inlet valve 62 is made by causing the water supply to be shut off.

When the infusion switch 86 is pressed the isolation solenoid valve 72 is closed by the hold-on switch 130 by operation of the coil 132 within the boiler control unit. This prevents water from being drawn off through the tap during infusion of coffee or tea. A two-pole on-off switch 90 with indicator lamp may be provided (see Figure 7).

It will be appreciated that the tank 8 need not be incorporated into a tea/coffee infusing apparatus but may just provide hot water. However the feature of having two thermostat probes will still be employed.

CLAIMS:

1.      Water heating apparatus comprising a tank having means for heating water characterised in that the tank outlet is at a position between its top and bottom and a significant distance above the bottom and in that a valve is provided to prevent water from reaching the tap as and until the water in the tank above the outlet is at a predetermined temperature.

2.      A water heater as claimed in any of the preceding claims in which the tank outlet is at a position about $\frac{1}{3}$ of the depth of the tank from the top thereof.

3.      Apparatus as claimed in Claim 1 or 2 wherein the means for measuring the temperature above the outlet comprises a thermostat probe positioned in the tank at or slightly above the level of the tank outlet, the valve being connected to the said probe.

4.      A coffee or tea making apparatus incorporating water heating apparatus as claimed in Claim 1 or 2.

5.      Apparatus as claimed in Claim 4 including an infusion switch which is connected to allow coffee or tea infusion to take place, inlet means being provided to prevent initiation of infusion until the water in the tank reaches the predetermined temperature.

6.      Apparatus as claimed in Claim 5 including control means operable to prevent discharge of water from the outlet during the period in which the infusion switch is allowing water to flow into the tank causing hot water to flow from the tank from a spray head.

7. Apparatus as claimed in any one of Claims 4 to 6 including a subsidiary tank mounted above the main water tank for connection of a water supply, the subsidiary tank being connected at or near the bottom of the main tank.

8. Apparatus as claimed in Claim 7 wherein the subsidiary tank is provided with first and second water level detectors which co-operate with the control means to ensure replenishment of the main water tank.

9. Apparatus as claimed in any of the preceding claims including a second temperature measuring means comprising a second thermostat probe positioned in the tank below the tank outlet, the second probe being connected to control means for the water heater.

Fig.1.

Fig .2.

Fig.3.

Fig.4.

Fig .5.

Isolation solenoid valve
Water filling tank

Thermal cut out
Boiler thermostat
(bottom)

Boiler

Top warmer on/off switches
and amber lights

100        22        116   128                    8                    92              92

Bottom warmer
on/off switch
and amber
light

14

72                                Hi  Lo        110        Hi  Lo   130              62        104

Water
ready
light

88                    Infuse control                    Boiler control            122

120        10            114            108  112        126            132

                                86

102        106            Infuse switch

12

Bottom    Boiler    Manual fill    Water ready    Water inlet    Top warmer elements
warmer    heater    switch        thermostat      valve
element   element                 (top)

0203701

5/6

Fig.6.

On/off switch and red light

Thermal cut out
Boiler thermostat (bottom)

Isolation solenoid valve

Water filling tank

Boiler

Top warmer on/off switches and amber lights

90

22    116    128

8

92    92

100

14

72

124

62    104

Water ready light

88

Hi  Lo    110

Infuse control

Hi  Lo    130

Boiler control

122

120

10

114    108    112

126    132

102

86

12

Infuse switch

Bottom warmer element

Boiler heater element

Manual fill switch

Water ready thermostat (top)

Water inlet valve

Top warmer elements

0203701

6/6